# EUROPEAN PATENT APPLICATION

(11) **EP 4 632 834 A1**
(43) Date of publication of application: **15.10.2025**
(21) Application number: 23947350.7
(22) Date of filing: 20.11.2023
(51) Int. Cl.: H01M 4/133, H01M 4/134, H01M 4/583, H01M 4/36, H01M 4/38, H01M 10/0525

(54) **SECONDARY BATTERY AND ELECTRIC DEVICE**

(30) Priority: 31.07.2023 CN 202310952247
(71) Applicant: Contemporary Amperex Technology Co., Limited, Ningde, Fujian 352100 (CN)
(72) Inventor: WU, Kai, Ningde, Fujian 352100 (CN); CHEN, Wenqiang, Ningde, Fujian 352100 (CN); WANG, Jiazheng, Ningde, Fujian 352100 (CN); LV, Zijian, Ningde, Fujian 352100 (CN); DENG, Jingxian, Ningde, Fujian 352100 (CN); GUO, Xiaoxin, Ningde, Fujian 352100 (CN)
(74) Representative: Thoma, Michael
(86) International application number: PCT/CN2023/132569
(87) International publication number: WO 2025/025412

(57) **Abstract**

A secondary battery and an electric apparatus are provided. The secondary battery includes a negative electrode plate, where the negative electrode plate includes a negative electrode current collector and a first active layer disposed on at least one surface of the negative electrode current collector, the first active layer includes first graphite and a first silicon-carbon composite, a flatness of the first graphite is greater than or equal to 2, and the first silicon-carbon composite includes a porous carbon substrate and a silicon-based material in pores of the porous carbon substrate.

## Description

### RELATED APPLICATIONS

This application claims priority to Chinese Patent Application No. 2023109522472, filed on July 31, 2023, and entitled "SECONDARY BATTERY AND ELECTRIC APPARATUS", which is incorporated herein by reference in its entirety.

### TECHNICAL FIELD

This application pertains to the field of secondary battery technology, specifically to a secondary battery and an electric apparatus.

### BACKGROUND

The statements herein merely provide background information related to this application and do not necessarily constitute prior art.

Silicon-based materials have a high capacity per gram, and their application in negative electrodes of secondary batteries can result in high energy densities of the batteries. However, after charge, the silicon-based materials exhibit significant volume swelling, leading to deterioration of cycling performance of the batteries.

### SUMMARY

This application provides a secondary battery, including a negative electrode plate, where the negative electrode plate includes a negative electrode current collector and a negative electrode active layer disposed on at least one surface of the negative electrode current collector, the negative electrode active layer includes a first active layer, the first active layer includes first graphite and a first silicon-carbon composite, a flatness of the first graphite is greater than or equal to 2, and the first silicon-carbon composite includes a porous carbon substrate and a silicon-based material in pores of the porous carbon substrate.

In the secondary battery described above, the first graphite with a flatness greater than or equal to 2 is used in combination with the first silicon-carbon composite to mitigate volume swelling of the silicon-carbon composite during charge, enhancing structural stability of the electrode plate, and thereby improving cycling performance of the battery.

In some embodiments, the flatness of the first graphite is 2.5 to 20. The flatness of the first graphite within this range can further enhance the structural stability of the electrode plate. Optionally, the flatness of the first graphite is 4 to 16.

In some embodiments, the first graphite includes primary particles. The primary particles have an appropriate flatness, helping to improve compressive strength of the first active layer. Optionally, a quantity percentage of the primary particles in the first graphite is greater than or equal to 90%.

In some embodiments, a volume-based median particle size Dᵥ50 of the first graphite is 12 µm to 18 µm. The volume-based median particle size Dᵥ50 of the first graphite within this range helps to achieve a high compacted density. Optionally, the volume-based median particle size Dᵥ50 of the first graphite is 14 µm to 16 µm.

In some embodiments, a specific surface area of the first graphite is 0.6 m²/g to 1.4 m²/g. The specific surface area of the first graphite within this range can provide an appropriate porosity, further increasing an energy density of the secondary battery while allowing an electrolyte to fully contact the first active layer, balancing good kinetic performance. Optionally, the specific surface area of the first graphite is 0.8 m²/g to 1.2 m²/g.

In some embodiments, the first graphite includes artificial graphite and/or natural graphite. Artificial graphite has good cycling performance, beneficial to improving the cycling performance of the secondary battery. Natural graphite exhibits good pressure-resistant performance, helping to enhance the compressive strength of the first active layer. Optionally, the first graphite includes natural graphite, and a mass percentage of the natural graphite in the first graphite is less than or equal to 20%.

In some embodiments, a volume-based median particle size Dᵥ50 of the first silicon-carbon composite is 5 µm to 13 µm. An excessively large volume-based median particle size Dᵥ50 of the first silicon-carbon composite may limit the charge performance of the secondary battery. An excessively small volume-based median particle size Dᵥ50 of the first silicon-carbon composite may result in high brittleness of the first active layer, causing cracks in the negative electrode plate during charge and affecting battery performance. Optionally, the volume-based median particle size Dᵥ50 of the first silicon-carbon composite is 7 µm to 11 µm.

In some embodiments, a specific surface area of the first silicon-carbon composite is 1 m²/g to 8 m²/g. An excessively large specific surface area of the first silicon-carbon composite may lead to poor cycling performance and storage performance. An excessively small specific surface area of the first silicon-carbon composite may result in a low porosity of the first silicon-carbon composite, thereby leading to poor kinetic performance of the battery. Optionally, the volume-based median particle size Dᵥ50 of the first silicon-carbon composite is 1 m²/g to 5 m²/g.

In some embodiments, a mass percentage of the first silicon-carbon composite in the first active layer is 5% to 50%. In the first active layer, an excessively small mass percentage of the first silicon-carbon composite results in an insignificant improvement in the battery energy density. An excessively large mass percentage of the first silicon-carbon composite results in an insignificant improvement in the compacted density.

In some embodiments, a mass percentage of the porous carbon substrate in the first silicon-carbon composite is greater than or equal to 40%. In the first silicon-carbon composite, an excessively small mass percentage of the porous carbon substrate may lead to poor conductivity of the first silicon-carbon composite, resulting in poor battery performance. An excessively large mass percentage of the porous carbon substrate may result in an excessively low mass percentage of the corresponding silicon-based material, thereby resulting in insignificant improvement in the battery energy density. Optionally, the mass percentage of the porous carbon substrate in the first silicon-carbon composite is 40% to 60%.

In some embodiments, a porosity of the porous carbon substrate is 30% to 60%. An excessively small porosity of the porous carbon substrate may lead to poor kinetic performance of the battery. An excessively large porosity of the porous carbon substrate may lead to poor cycling performance and storage performance of the battery.

In some embodiments, a mass percentage of the silicon-based material in the first silicon-carbon composite is less than or equal to 60%. In the first silicon-carbon composite, an excessively large mass percentage of the silicon-based material may lead to poor compressive strength of the first active layer, and an excessively large mass percentage of the silicon-based material may increase a swelling rate of the first silicon-carbon composite material, thereby resulting in poor structural stability of the negative electrode plate during charge. Optionally, the mass percentage of the silicon-based material in the first silicon-carbon composite is 40% to 60%.

In some embodiments, the silicon-based material includes nano-silicon, and optionally, a grain size of the nano-silicon is less than or equal to 6 nm. In the first silicon-carbon composite, a smaller grain size of the nano-silicon can result in better cycling performance of the first silicon-carbon composite.

In some embodiments, the negative electrode active layer further includes a second active layer, the second active layer is disposed on a surface of the first active layer away from the negative electrode current collector, and the second active layer includes second graphite. The provision of the second active layer can further enhance the overall compacted density of the negative electrode plate.

In some embodiments, a surface of the second graphite is coated with a carbon coating layer. In this case, the provision of the carbon coating layer can improve overall conductivity of the second graphite, enhancing fast-charge performance of the secondary battery. Optionally, a thickness of the carbon coating layer is 10 nm to 300 nm, and further optionally, 20 nm to 100 nm.

In some embodiments, the second graphite includes secondary particles. The introduction of the secondary particles can further improve the charge performance of the secondary battery. Optionally, a quantity percentage of the secondary particles in the second graphite is greater than or equal to 50%, and optionally, 50% to 90%.

In some embodiments, a volume-based median particle size Dᵥ50 of the second graphite is smaller than the volume-based median particle size Dᵥ50 of the first graphite. A smaller volume-based median particle size Dᵥ50 of the second graphite can reduce a transmission path of lithium ions, helping to improve the kinetic performance of the negative electrode plate, thereby enhancing fast-charge performance of the battery. Optionally, the volume-based median particle size Dᵥ50 of the second graphite is 9 µm to 15 µm, and further optionally, 11 µm to 13 µm.

In some embodiments, a specific surface area of the second graphite is greater than the specific surface area of the first graphite. This helps to improve the cycling performance of the battery. Optionally, the specific surface area of the second graphite is 0.8 m²/g to 1.6 m²/g, and further optionally, 1 m²/g to 1.4 m²/g.

In some embodiments, the second active layer further includes a second silicon-carbon composite. The inclusion of the second silicon-carbon composite in the second active layer can further increase the energy density of the secondary battery. Optionally, a material of the second silicon-carbon composite includes a material of the first silicon-carbon composite.

In some embodiments, a mass percentage of the second silicon-carbon composite in the second active layer is 5% to 50%. In the second active layer, an excessively small mass percentage of the second silicon-carbon composite results in insignificant improvement in the battery energy density. An excessively large mass percentage of the second silicon-carbon composite results in insignificant improvement in the compacted density.

This application further provides an electric apparatus, including the secondary battery described above.

### BRIEF DESCRIPTION OF DRAWINGS

To more clearly illustrate the technical solutions of this application, the drawings used in this application are briefly described below. It is clear that the accompanying drawings in the following descriptions show merely some embodiments of this application, and persons of ordinary skill in the art may still derive other drawings from these accompanying drawings without creative efforts.
FIG. 1 is a schematic diagram of a secondary battery according to an embodiment of this application;
FIG. 2 is an exploded view of the secondary battery according to the embodiment of this application shown in FIG. 1; and
FIG. 3 is a schematic diagram of an electric apparatus using a secondary battery as a power source according to an embodiment of this application.

Descriptions of reference signs:
1. secondary battery; 11. housing; 12. electrode assembly; 13. cover plate; and 2. electric apparatus.

To better describe and illustrate the embodiments and/or examples of the inventions disclosed herein, reference may be made to one or more drawings. Additional details or examples used to describe the accompanying drawings should not be construed as limitations on the scope of any one of the disclosed inventions, the currently described embodiments and/or examples, and the best mode of these inventions currently understood.

### DESCRIPTION OF EMBODIMENTS

To facilitate understanding of this application, a more comprehensive description of this application is provided below with reference to the accompanying drawings. Preferred embodiments of this application are shown in the accompanying drawings. However, this application can be implemented in many different forms and is not limited to the embodiments described herein. On the contrary, the purpose of providing these embodiments is to make the understanding of the disclosure of this application more thorough and comprehensive.

Unless otherwise defined, all technical and scientific terms used herein have the same meanings as commonly understood by persons skilled in the art to which this application pertains. The terms used in the specification of this application herein are for the purpose of describing specific embodiments only and are not intended to limit this application. The term "and/or" used herein includes any and all combinations of one or more associated items listed.

A "range" disclosed in this application may be defined in the form of a lower limit and an upper limit, where a given range is defined by selecting a lower limit and an upper limit, and the selected lower limit and upper limit define the boundaries of a particular range. Ranges defined in this manner may include or exclude endpoints, any of the endpoints may be independently included or excluded, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum range values of 1 and 2 are listed, and if maximum range values of 3, 4, and 5 are listed, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is a short representation of a combination of these values. In addition, a parameter expressed as an integer greater than or equal to 2 is equivalent to listing that the parameter is, for example, an integer among 2, 3, 4, 5, 6, 7, 8, 9, 10, 11, 12, and so on. For example, when a parameter is described as an integer selected from "2-10", it is equivalent to listing the integers 2, 3, 4, 5, 6, 7, 8, 9, and 10.

In this application, unless specifically specified, the terms such as "a plurality of" and "multiple" refer to a quantity greater than or equal to 2. For example, "one or more" means one or more than two or equal to two.

If not specifically stated, all embodiments and optional embodiments of this application may be combined with each other to form new technical solutions.

Reference to an "embodiment" herein means that a particular feature, structure, or characteristic described with reference to the embodiment may be included in at least one embodiment or implementation of this application. The appearance of this phrase in various places in the specification does not necessarily refer to the same embodiment, nor is it an independent or alternative embodiment mutually exclusive with other embodiments. Persons skilled in the art explicitly and implicitly understand that the embodiments described herein may be combined with other embodiments. The term "implementation" in this application has a similar understanding.

Persons skilled in the art can understand that in the methods described in various implementations or embodiments, the order of steps does not imply a strict execution sequence that imposes any limitation on the implementation process; and the specific execution sequence of each step should be determined by its function and possible inherent logic. If not specifically stated, all steps of this application may be performed sequentially or randomly. In some embodiments, steps are sequentially performed. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

In this application, inclusive technical features or technical solutions described with words such as "containing," "including," or "comprising," unless otherwise specified, do not exclude additional items beyond the listed items and may be regarded as providing both an exclusive feature or solution consisting of the listed items and an inclusive feature or solution including additional items beyond the listed items. For example, A includes a1, a2, and a3; unless otherwise specified, it may also include other items or may not include additional items, and may be regarded as providing both the feature or solution of "A consisting of a1, a2, and a3" and the feature or solution of "A including not only a1, a2, and a3 but also other items."

In this application, unless otherwise specified, A (for example, B) indicates that B is a non-limiting example of A, and it can be understood that A is not limited to B.

In this application, "optionally," "optional," and "option" means being included not be included, that is, either of two parallel solutions "including" or "not including" a feature can be used. If a technical solution mentions multiple "optional" items, unless otherwise specified and provided there are no contradictions or mutual restrictions, each "optional" item is considered independently.

An embodiment of this application provides a secondary battery, including a negative electrode plate, where the negative electrode plate includes a negative electrode current collector and a negative electrode active layer disposed on at least one surface of the negative electrode current collector, the negative electrode active layer includes a first active layer, the first active layer includes first graphite and a first silicon-carbon composite, a flatness of the first graphite is greater than or equal to 2, and the first silicon-carbon composite includes a porous carbon substrate and a silicon-based material in pores of the porous carbon substrate. In the secondary battery of this embodiment, the first graphite with a flatness greater than or equal to 2 is used in combination with the first silicon-carbon composite to mitigate volume swelling of the silicon-carbon composite during charge, enhancing structural stability of the electrode plate, and thereby improving cycling performance of the battery.

Meanwhile, the first graphite with a flatness greater than or equal to 2 is used in combination with the first silicon-carbon composite to alleviate brittleness change of the silicon-carbon composite during charge, further enhancing structural stability of the electrode plate.

In this application, the flatness is defined as a ratio of a long diameter to a thickness of a particle, where a smallest dimension is a thickness, a largest dimension is the long diameter, and a dimension in the middle is a short diameter. That is, the flatness of the first graphite refers to a ratio of a long diameter to a thickness of a first graphite particle.

In this application, a flatness can be tested by using the following method: first, the electrode plate is cut into a size of 6 millimeters (mm)×6 mm, attached to an ion polisher, cut at a voltage of 7.5 kilovolts (kV) for 30 minutes (min), and tested and observed according to the JY/T010-1996 test standard with a Sigma 300 scanning electron microscope and energy dispersive spectrometer. At least 20 graphite particles are selected. A ratio of a long diameter to a thickness is calculated for each graphite particle. An average is used as a flatness of corresponding graphite.

Optionally, the first graphite includes flake graphite. Further optionally, the first graphite includes scaly graphite.

In some embodiments, the flatness of the first graphite is 2.5 to 20. The flatness of the first graphite within this range can further enhance the structural stability of the electrode plate. Optionally, the flatness of the first graphite may be 2, 3, 4, 5, 6, 7, 8, 9, 10, 11, 12, 13, 14, 15, 16, 17, 18, 19, or 20. Optionally, the flatness of the first graphite is 4 to 16. For example, the range of the flatness of the first graphite may be 2-8, 2-4, or 4-8.

In some embodiments, a surface of the first graphite does not include a carbon coating layer. Applying carbon coating to the first graphite can improve overall conductivity of the first graphite, potentially enhancing fast-charge performance of the battery. However, the introduction of the carbon coating layer may increase overall hardness of the first graphite, limiting improvement in a compacted density of the first active layer.

In some embodiments, the first graphite includes primary particles. The primary particles have an appropriate flatness, helping to improve compressive strength of the first active layer. Optionally, a quantity percentage of the primary particles in the first graphite is greater than or equal to 90%. For example, the quantity percentage of the primary particles in the first graphite is 90%, 91%, 92%, 93%, 94%, 95%, 96%, 97%, 98%, 99%, or 100%. Further optionally, the quantity percentage of the primary particles in the first graphite is 95% to 100%.

In some embodiments, the first graphite further includes secondary particles, and a quantity percentage of the secondary particles in the first graphite is less than or equal to 10%. When the first graphite further includes secondary particles, the fast-charge performance of the secondary battery can be improved. However, compared with the primary particles, the secondary particles have a higher sphericity, and when the quantity percentage of the secondary particles in the first graphite is excessively large, improvement in compressive strength of the first active layer is limited. Still further optionally, the quantity percentage of the secondary particles in the first graphite is less than or equal to 9%, 8%, 7%, 6%, 5%, 4%, 3%, 2%, or 1%.

As some examples of particle size selections of the first graphite, a volume-based median particle size Dᵥ50 of the first graphite is 12 micrometers (µm) to 18 µm. The volume-based median particle size Dᵥ50 of the first graphite within this range helps to achieve a high compacted density. Optionally, the Dᵥ50 of the first graphite is 12 µm, 13 µm, 14 µm, 15 µm, 16 µm, 17 µm, or 18 µm. Further optionally, the Dᵥ50 of the first graphite is 14 µm to 16 µm.

It can be understood that, in this application, Dᵥ50 refers to a particle size corresponding to a situation where a cumulative particle size distribution of particles reaches 50% in a volume-based cumulative distribution curve, and a physical meaning is that particles with a smaller (or larger) size account for 50%. As an example, Dᵥ50 can be obtained from a particle size distribution curve measured by a laser diffraction particle size analyzer Mastersizer 3000 according to the GB/T 19077-2016 test method.

As some examples of specific surface area selections of the first graphite, the specific surface area of the first graphite is 0.6 square meters per gram (m²/g) to 1.4 m²/g. The specific surface area of the first graphite within this range can provide an appropriate porosity, further increasing an energy density of the secondary battery while allowing an electrolyte to fully contact the first active layer, balancing good kinetic performance. Optionally, the specific surface area of the first graphite is 0.6 m²/g, 0.7 m²/g, 0.8 m²/g, 0.9 m²/g, 1 m²/g, 1.1 m²/g, 1.2 m²/g, 1.3 m²/g, or 1.4 m²/g. Further optionally, the specific surface area of the first graphite is 0.8 m²/g to 1.2 m²/g.

In this application, the specific surface area test method can follow the GB/T 19587-2004 standard "Determination of the specific surface area of solids by gas adsorption using the BET method", and the test is conducted according to specific surface area analysis test using a nitrogen adsorption method, and the BET (Brunauer Emmett Teller) method is used for calculation, where the specific surface area analysis test through nitrogen adsorption can be performed using a surface area and porosity analyzer Tni StarlI 3020 from Micromeritics, USA.

In some embodiments, the first graphite includes artificial graphite and/or natural graphite. Artificial graphite has good cycling performance, beneficial to improving the cycling performance of the secondary battery. Natural graphite exhibits good pressure-resistant performance, helping to enhance the compressive strength of the first active layer.

Optionally, the first graphite includes natural graphite, and a mass percentage of the natural graphite in the first graphite is less than or equal to 20%. When the amount of natural graphite is large, improvement in the battery cycling performance may be limited. Further optionally, the mass percentage of the natural graphite in the first graphite is less than or equal to 18%, 15%, 12%, 10%, 8%, 5%, 2%, or 1%.

As some examples of particle size selections of the first silicon-carbon composite, a volume-based median particle size Dᵥ50 of the first silicon-carbon composite is 5 µm to 13 µm. An excessively large volume-based median particle size Dᵥ50 of the first silicon-carbon composite may limit the charge performance of the secondary battery. An excessively small volume-based median particle size Dᵥ50 of the first silicon-carbon composite may result in high brittleness of the first active layer, causing cracks in the negative electrode plate during charge and affecting battery performance. Optionally, the volume-based median particle size Dᵥ50 of the first silicon-carbon composite is 5 µm, 6 µm, 7 µm, 8 µm, 9 µm, 10 µm, 11 µm, 12 µm, or 13 µm. Further optionally, the volume-based median particle size Dᵥ50 of the first silicon-carbon composite is 7 µm to 11 µm.

In some embodiments, a specific surface area of the first silicon-carbon composite is 1 m²/g to 8 m²/g. An excessively large specific surface area of the first silicon-carbon composite may lead to poor cycling performance and storage performance. An excessively small specific surface area of the first silicon-carbon composite may result in a low porosity of the first silicon-carbon composite, thereby leading to poor kinetic performance of the battery. Optionally, the specific surface area of the first silicon-carbon composite is 1 m²/g, 2 m²/g, 3 m²/g, 4 m²/g, 5 m²/g, 6 m²/g, 7 m²/g, or 8 m²/g. Further optionally, the specific surface area of the first silicon-carbon composite is 1 m²/g to 5 m²/g.

In some embodiments, a mass percentage of the first silicon-carbon composite in the first active layer is 5% to 50%. In the first active layer, an excessively small mass percentage of the first silicon-carbon composite results in an insignificant improvement in the battery energy density. An excessively large mass percentage of the first silicon-carbon composite results in an insignificant improvement in the compacted density. Optionally, the mass percentage of the first silicon-carbon composite in the first active layer is 5%, 8%, 10%, 12%, 15%, 18%, 20%, 22%, 25%, 28%, 30%, 35%, 40%, 45%, or 50%.

In some embodiments, a mass percentage of the porous carbon substrate in the first silicon-carbon composite is greater than or equal to 40%. In the first silicon-carbon composite, an excessively small mass percentage of the porous carbon substrate may lead to poor conductivity of the first silicon-carbon composite, resulting in poor battery performance. An excessively large mass percentage of the porous carbon substrate may result in an excessively low mass percentage of the corresponding silicon-based material, thereby resulting in insignificant improvement in the battery energy density. Optionally, the mass percentage of the porous carbon substrate in the first silicon-carbon composite is 40% to 60%. Further optionally, the mass percentage of the porous carbon substrate in the first silicon-carbon composite is 40%, 42%, 45%, 48%, 50%, 52%, 55%, 58%, or 60%.

In some embodiments, a porosity of the porous carbon substrate is 30% to 60%. An excessively small porosity of the porous carbon substrate may lead to poor kinetic performance of the battery. An excessively large porosity of the porous carbon substrate may lead to poor cycling performance and storage performance of the battery. Optionally, the porosity of the porous material is 30%, 32%, 35%, 38%, 40%, 42%, 45%, 48%, 50%, 52%, 55%, 58%, or 60%.

In some embodiments, a mass percentage of the silicon-based material in the first silicon-carbon composite is less than or equal to 60%. In the first silicon-carbon composite, an excessively large mass percentage of the silicon-based material may lead to poor compressive strength of the first active layer, and an excessively large mass percentage of the silicon-based material may increase a swelling rate of the first silicon-carbon composite material, thereby resulting in poor structural stability of the negative electrode plate during charge. Optionally, the mass percentage of the silicon-based material in the first silicon-carbon composite is 40% to 60%. Further optionally, the mass percentage of the silicon-based material in the first silicon-carbon composite is 40%, 42%, 45%, 48%, 50%, 52%, 55%, 58%, or 60%.

In some embodiments, the silicon-based material includes nano-silicon, and optionally, a grain size of the nano-silicon is less than or equal to 6 nanometers (nm). In the first silicon-carbon composite, a smaller grain size of the nano-silicon can result in better performance of the first silicon-carbon composite. Optionally, the grain size of the nano-silicon is less than or equal to 5 nm, 4 nm, 3 nm, 2 nm, or 1 nm.

It can be understood that amounts of the silicon element and carbon element in the silicon-carbon composite can be tested by using the following method: first, the electrode plate is cut into a size of 6 mm×6 mm, attached to an ion polisher, and cut at a voltage of 7.5 kV for 30 min; and according to the JY/T010-1996 test standard, the elements in the region are scanned with a Sigma 300 scanning electron microscope and energy dispersive spectrometer, to obtain the amount percentage of the silicon element and carbon element in the silicon-carbon composite.

In some embodiments, the negative electrode active layer further includes a second active layer, the second active layer is disposed on a surface of the first active layer away from the negative electrode current collector, and the second active layer includes second graphite. The provision of the second active layer can further enhance the overall compacted density of the negative electrode plate.

Optionally, a surface of the second graphite is coated with a carbon coating layer. In this case, the provision of the carbon coating layer can improve overall conductivity of the second graphite, enhancing fast-charge performance of the secondary battery. Optionally, a thickness of the carbon coating layer is 10 nm to 300 nm. For example, the thickness of the carbon coating layer is 10 nm, 20 nm, 30 nm, 40 nm, 50 nm, 60 nm, 70 nm, 80 nm, 90 nm, 100 nm, 150 nm, 200 nm, 250 nm, or 300 nm. Further optionally, the thickness is 20 nm to 100 nm.

In some embodiments, the second graphite includes secondary particles. The introduction of the secondary particles can further improve the charge performance of the secondary battery. Optionally, a quantity percentage of the secondary particles in the second graphite is greater than or equal to 50%. Further optionally, the quantity percentage of the secondary particles in the second graphite is greater than or equal to 50%, 60%, 70%, 80%, or 90%. Still further optionally, the second graphite is secondary particles.

In some embodiments, a volume-based median particle size Dᵥ50 of the second graphite is smaller than the volume-based median particle size Dᵥ50 of the first graphite. A smaller volume-based median particle size Dᵥ50 of the second graphite can reduce a transmission path of lithium ions, helping to improve the kinetic performance of the negative electrode plate, thereby enhancing fast-charge performance of the battery. Optionally, the volume-based median particle size Dᵥ50 of the second graphite is 9 µm to 15 µm. For example, the volume-based median particle size Dᵥ50 of the second graphite is 9 µm, 10 µm, 11 µm, 12 µm, 13 µm, 14 µm, or 15 µm. Further optionally, the volume-based median particle size Dᵥ50 of the second graphite is 11 µm to 13 µm.

In some embodiments, a specific surface area of the second graphite is greater than the specific surface area of the first graphite. This helps to improve the cycling performance of the battery. Optionally, the specific surface area of the second graphite is 0.8 m²/g to 1.6 m²/g. For example, the specific surface area of the second graphite is 0.8 m²/g, 0.9 m²/g, 1 m²/g, 1.1 m²/g, 1.2 m²/g, 1.3 m²/g, 1.4 m²/g, 1.5 m²/g, or 1.6 m²/g. Further optionally, the specific surface area of the second graphite is 1 m²/g to 1.4 m²/g.

In some embodiments, the second graphite includes artificial graphite, further improving the cycling performance of the battery.

In some embodiments, the second active layer further includes a second silicon-carbon composite. The inclusion of the second silicon-carbon composite in the second active layer can further increase the energy density of the secondary battery.

Optionally, a material of the second silicon-carbon composite includes a material of the first silicon-carbon composite. For example, the second silicon-carbon composite includes a porous carbon substrate and a silicon-based material in the pores of the porous carbon substrate. A volume-based median particle size Dᵥ50 of the second silicon-carbon composite is 5 µm to 13 µm, and optionally, 7 µm to 11 µm. A specific surface area of the second silicon-carbon composite is 1 m²/g to 8 m²/g, and optionally, 1 m²/g to 5 m²/g. A mass percentage of the porous carbon substrate in the second silicon-carbon composite is greater than or equal to 40%, and optionally, 40% to 60%. The porosity of the porous carbon substrate is 30% to 60%. A mass percentage of the silicon-based material in the second silicon-carbon composite is less than or equal to 60%, and optionally, 40% to 60%. The silicon-based material includes nano-silicon, and a grain size of the nano-silicon is less than or equal to 6 nm. Optionally, corresponding features of the second silicon-carbon composite may be selected from the features of the first silicon-carbon composite described above.

It can be understood that the second silicon-carbon composite is identical to the first silicon-carbon composite.

In some embodiments, a mass percentage of the second silicon-carbon composite in the second active layer is 5% to 50%. In the second active layer, an excessively small mass percentage of the second silicon-carbon composite results in insignificant improvement in the battery energy density. An excessively large mass percentage of the second silicon-carbon composite results in insignificant improvement in the compacted density. Optionally, the mass percentage of the second silicon-carbon composite in the second active layer is 5%, 8%, 10%, 12%, 15%, 18%, 20%, 22%, 25%, 28%, 30%, 35%, 40%, 45%, or 50%.

In some embodiments, the silicon-carbon composite may be prepared by depositing a silicon-based material in the pores of the porous carbon substrate. Optionally, the silicon-based material may be deposited in the pores of the porous carbon substrate by vapor deposition to obtain the silicon-carbon composite.

Optionally, a preparation method of the silicon-carbon composite includes the following steps.

Step S101: Place the porous carbon substrate in a vapor deposition furnace, where the furnace is kept rotating, purged with an inert gas, and preheated to 200 degrees Celsius (°C) to 300 °C. Optionally, the porosity of the porous carbon substrate is 30% to 60%. Optionally, the inert gas includes at least one of nitrogen and argon. Optionally, the porous carbon substrate includes at least one of activated carbon, biomass carbon, and resin carbon.

Step S102: Introduce a mixed gas of a silicon source gas and an inert gas at a certain ratio, and control a furnace pressure within a slight positive pressure range. Optionally, a volume fraction of the silicon source gas in the mixed gas is 5% to 30%. Optionally, the furnace pressure is controlled to be 200 pascals (Pa) to 600 Pa above standard atmospheric pressure. Optionally, the silicon source gas includes at least one of silane and disilane.

Step S103: Continue heating to 500 °C to 700 °C, and perform deposition for 2 hours (h) to 12 h.

Step S104: Turn off the silicon source gas, adjust the temperature to 600 °C to 800 °C, introduce a carbon source gas, perform deposition for 2 h to 12 h, and screen a product discharged from the furnace, to obtain the silicon-carbon composite. Optionally, a volume fraction of the carbon source gas in the mixed gas is 5% to 20%. Optionally, the carbon source gas includes at least one of methane, ethylene, and acetylene.

Another embodiment of this application provides an electric apparatus. The electric apparatus includes the secondary battery described above.

The secondary battery and electric apparatus of this application are described below with appropriate reference to the drawings.

Typically, a secondary battery includes a positive electrode plate, a negative electrode plate, an electrolyte, and a separator. During charge/discharge of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate, primarily to prevent short-circuit between the positive electrode and negative electrode and allow ions to pass through.

### Positive electrode plate

The positive electrode plate includes a positive electrode current collector and a positive electrode film layer disposed on at least one surface of the positive electrode current collector, and the positive electrode film layer includes a positive electrode active material.

As a non-limiting example, the positive electrode current collector has two opposite surfaces in a thickness direction of the positive electrode current collector, and the positive electrode active material layer is disposed on either or both of the two opposite surfaces of the positive electrode current collector.

In some embodiments, the positive electrode current collector is a metal foil or a composite current collector. For example, an aluminum foil is used as the metal foil. The composite current collector may include a polymer material substrate and a metal layer formed on at least one surface of the polymer material substrate. The composite current collector may be obtained by forming a metal material on the polymer material substrate. Non-limiting examples of the metal material in the positive electrode current collector may include one or more of aluminum, aluminum alloy, nickel, nickel alloy, titanium, titanium alloy, silver, and silver alloy. Non-limiting examples of the polymer material substrate in the positive electrode current collector may include one or more of polypropylene (PP), polyethylene terephthalate (PET), polybutylene terephthalate (PBT), polystyrene (PS), and polyethylene (PE) substrates.

In some embodiments, the positive electrode active material is a positive electrode active material known in the art for batteries. As non-limiting examples, the positive electrode active material may include one or more of the following materials: a lithium-containing phosphate with an olivine structure, a lithium transition metal oxide, and their respective modified compounds. However, this application is not limited to these materials, and other conventional materials that can be used as positive electrode active materials for batteries may be used. These positive electrode active materials are used alone or in combination of two or more. Examples of lithium transition metal oxide may include, but are not limited to, one or more of lithium cobalt oxide (such as LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Non-limiting examples of the lithium-containing phosphate with an olivine structure may include, but are not limited to, one or more of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Non-limiting examples of the lithium cobalt oxide may include LiCoO₂. Non-limiting examples of lithium nickel oxide may include LiNiO₂. Non-limiting examples of lithium manganese oxide may include LiMnO₂, LiMn₂O₄, and the like. Non-limiting examples of lithium nickel cobalt manganese oxide may include LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), and the like. Non-limiting examples of lithium nickel cobalt aluminum oxide may include LiNi_{0.8}Co_{0.15}Al_{0.05}O₂.

In some embodiments, the positive electrode active material layer may further optionally include a binder. As non-limiting examples, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer may further optionally include a conductive agent. As non-limiting examples, the conductive agent may include one or more of superconducting carbon, acetylene black, carbon black, Ketjen black, carbon dots, carbon nanotubes, graphene, and carbon nanofibers.

In some embodiments, the positive electrode plate is prepared by using the following method: components for preparing the positive electrode plate, such as the positive electrode active material, the conductive agent, the binder, and any other components, are dispersed in a solvent to form a positive electrode slurry; the positive electrode slurry is applied to at least one surface of the positive electrode current collector; and after processes such as drying and cold pressing, the positive electrode plate is obtained. The solvent may be selected from, but not limited to, any of those in the embodiments described above, such as N-methylpyrrolidone (NMP). The positive electrode slurry on the surface of the positive electrode current collector is applied to a single surface or two surfaces of the positive electrode current collector. The positive electrode slurry on the surface of the positive electrode current collector is applied to a single surface or two surfaces of the positive electrode current collector. A solid content of the positive electrode slurry is 40wt% to 80wt%. A viscosity of the positive electrode slurry at room temperature is adjusted to 5000 millipascal-seconds (mPa·s) to 25000 mPa·s. During application of the positive electrode slurry, based on dry weight (excluding the solvent), a surface density per unit area for coating may be 15 milligrams per square centimeter (mg/cm²) to 35 mg/cm². A compacted density of the positive electrode plate may be 3.0 grams per cubic centimeter (g/cm³) to 3.6 g/cm³, optionally 3.3 g/cm³ to 3.5 g/cm³.

### Negative electrode plate

The negative electrode plate includes a negative electrode current collector and a negative electrode active material layer disposed on at least one surface of the negative electrode current collector, and the negative electrode active material layer includes a negative electrode active material.

As a non-limiting example, the negative electrode current collector has two opposite surfaces in a thickness direction of the negative electrode current collector, and the negative electrode active material layer is disposed on either or both of the two opposite surfaces of the negative electrode current collector.

In some embodiments, the negative electrode current collector may be a metal foil or a composite current collector. For example, a copper foil is used as the metal foil. The composite current collector may include a polymer material substrate and a metal layer formed on at least one surface of the polymer material substrate. The composite current collector may be obtained by forming a metal material on the polymer material substrate. Non-limiting examples of the metal material in the negative electrode current collector may include one or more of copper, copper alloy, nickel, nickel alloy, titanium, titanium alloy, silver, and silver alloy. Non-limiting examples of the polymer material substrate in the negative electrode current collector may include one or more of polypropylene (PP), polyethylene terephthalate (PET), polybutylene terephthalate (PBT), polystyrene (PS), and polyethylene (PE) substrates.

In some embodiments, the negative electrode active material may be a negative electrode active material known in the art for batteries. As non-limiting examples, the negative electrode active material may include one or more of the following materials: artificial graphite, natural graphite, soft carbon, hard carbon, a silicon-based material, a tin-based material, and lithium titanate. The silicon-based material may include one or more of elemental silicon, a silicon-oxygen compound, a silicon-carbon composite, a silicon-nitrogen composite, and silicon alloy. The tin-based material may include one or more of elemental tin, a tin-oxygen compound, and tin alloy. However, this application is not limited to these materials, and other conventional materials that can be used as negative electrode active materials for batteries may be used. These negative electrode active materials are used alone or in combination of two or more.

In some embodiments, the negative electrode active material layer may further optionally include a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may further optionally include a conductive agent. The conductive agent may include one or more of superconducting carbon, acetylene black, carbon black, Ketjen black, carbon dots, carbon nanotubes, graphene, and carbon nanofibers.

In some embodiments, the negative electrode active material layer may further optionally include other additives, such as a thickener (for example, sodium carboxymethyl cellulose (CMC-Na)).

In some embodiments, the negative electrode plate is prepared by using the following method: components for preparing the negative electrode plate, such as the negative electrode active material, the conductive agent, the binder, and any other components, are dispersed in a solvent (a non-limiting example of the solvent is deionized water) to form a negative electrode slurry; the negative electrode slurry is applied to at least one surface of the negative electrode current collector; and after processes such as drying and cold pressing, the negative electrode plate is obtained. The negative electrode slurry on the surface of the negative electrode current collector is applied to a single surface or two surfaces of the negative electrode current collector. A solid content of the negative electrode slurry was 40wt% to 60wt%. A viscosity of the negative electrode slurry at room temperature is adjusted to 2000 mPa·s to 10000 mPa·s. During application of the negative electrode slurry, based on dry weight (excluding the solvent), a surface density per unit area for coating may be 75 grams per square centimeter (g/cm²) to 220 g/cm². A compacted density of the negative electrode plate may be 1.0 g/cm³ to 1.8 g/cm³.

### Electrolyte

The electrolyte serves to conduct ions between the positive electrode plate and the negative electrode plate. A type of the electrolyte is not particularly limited in this application, and can be selected based on requirements. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro(bisoxalato)phosphate (LiDFOP), and lithium tetrafluoro(oxalato)phosphate (LiTFOP).

In some embodiments, the solvent may include one or more of ethylene carbonate (EC, 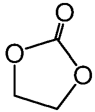 ), propylene carbonate (PC, 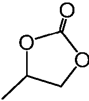 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate 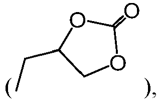 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte may further optionally include an additive. For example, the additive may include a negative electrode film-forming additive or a positive electrode film-forming additive, or include an additive capable of improving certain performance of a battery, such as an additive for improving overcharge performance of the battery, or an additive for improving high-temperature or low-temperature performance of the battery.

In some embodiments, the additive in the liquid electrolyte may include, but is not limited to, one or more of fluoroethylene carbonate (FEC), difluoroethylene carbonate (DFEC), and trifluoromethyl ethylene carbonate (TFPC).

### Separator

In some embodiments, the secondary battery further includes a separator. A type of the separator is not particularly limited in this application, and any well-known porous-structure separator with good chemical and mechanical stability may be selected.

In some embodiments, a material of the separator may include one or more of glass fiber, non-woven fabric, polyethylene, polypropylene, and polyvinylidene fluoride. The separator may a single-layer film or a multilayer composite film. This is not particularly limited. When the separator was a multilayer composite film, materials of the layers may be the same or different. This is not particularly limited.

In some embodiments, a thickness of the separator is 6 µm to 40 µm, and optionally 12 µm to 20 µm.

In some embodiments, the positive electrode plate, the negative electrode plate, and the separator may be manufactured into an electrode assembly through winding or lamination.

In some embodiments, the secondary battery may include an outer package. The outer package may be used to encapsulate the electrode assembly and the electrolyte described above.

In some embodiments, the outer package of the secondary battery may be a hard shell, such as a hard plastic shell, an aluminum shell, or a steel shell. Alternatively, the outer package of the secondary battery may be a soft pack, such as a soft pouch. A material of the soft pack may be plastic, and further, non-limiting examples of the plastic may include one or more of polypropylene, polybutylene terephthalate, and polybutylene succinate.

The secondary battery includes at least one battery cell. The secondary battery may include one or more battery cells.

In this application, unless otherwise specified, a "battery cell" refers to a basic unit capable of conversion between chemical energy and electrical energy, and typically includes at least a positive electrode plate, a negative electrode plate, and an electrolyte. During charge/discharge of the battery, active ions intercalate and deintercalate back and forth between the positive electrode plate and the negative electrode plate. The electrolyte conducts the active ions between the positive electrode plate and the negative electrode plate.

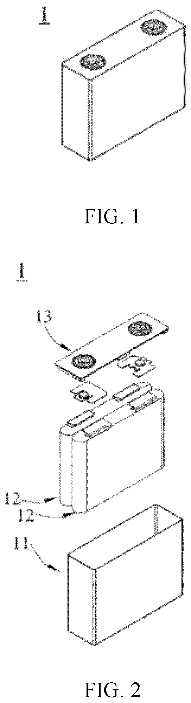

A shape of the battery cell is not particularly limited in this application, and the battery cell may be cylindrical, rectangular, or of any other shape. For example, FIG. 1 shows a rectangular battery cell 1 as an example.

In some embodiments, referring to FIG. 2, the outer package may include a housing 11 and a cover plate 13. The housing 11 may include a bottom plate and a side plate connected to the bottom plate, where the bottom plate and the side plate enclose an accommodating cavity. The housing 11 has an opening communicating with the accommodating cavity, and the cover plate 13 is capable of covering the opening to seal the accommodating cavity. The positive electrode plate, the negative electrode plate, and the separator are manufactured into an electrode assembly 12 through winding or lamination. The electrode assembly 12 is encapsulated in the accommodating cavity. The electrolyte infiltrates the electrode assembly 12. One or more electrode assemblies 12 are contained in the battery cell 1, and persons skilled in the art can make selections according to actual needs.

The secondary battery may be a battery module or a battery pack.

The battery module includes at least one battery cell. The battery module may contain one or more battery cells, and persons skilled in the art could appropriately make selections based on application and a capacity of the battery module.

In the battery module, multiple battery cells may be arranged sequentially along a length direction of the battery module, or may be arranged in any other manner. Further, the multiple battery cells are fastened by fasteners.

Optionally, the battery module may further include a casing with an accommodating space, and the multiple battery cells are accommodated in the accommodating space.

In some embodiments, the battery module described above is assembled into a battery pack, and the battery pack may contain one or more battery modules, and persons skilled in the art may appropriately make selections based on application and a capacity of the battery pack.

The battery pack may include a battery box and multiple battery modules arranged in the battery box. The battery box includes an upper box body and a lower box body, where the upper box body is capable of covering the lower box body to form the enclosed space for accommodating the battery module. The multiple battery modules may be arranged in the battery box in any manner.

In addition, this application further provides an electric apparatus, where the electric apparatus includes the secondary battery provided by this application. The secondary battery may be used as a power source for the electric apparatus or as an energy storage unit for the electric apparatus. The electric apparatus may include, but is not limited to, mobile devices, electric vehicles, electric trains, ships, satellites, and energy storage systems. The mobile devices may be, for example, mobile phones, notebook computers, and the like. For example, the electric vehicles may be, but are not limited to, battery electric vehicles, hybrid electric vehicles, plug-in hybrid electric vehicles, electric bicycles, electric scooters, electric golf carts, electric trucks, and the like.

As an electric apparatus, the secondary battery may be selected based on a usage requirement.

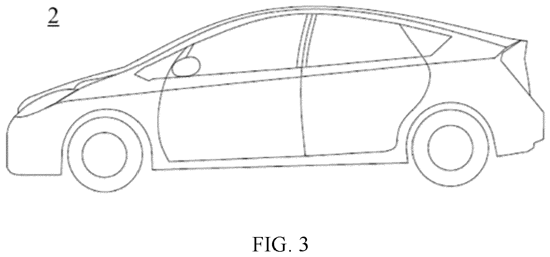

FIG. 3 shows an electric apparatus 2 as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or battery module may be used.

In another example, the apparatus may be a mobile phone, a tablet computer, a notebook computer, or the like. The apparatus is typically light and thin, and a secondary battery may be used as a power source.

To make the technical problems solved by this application, the technical solutions, and the beneficial effects clearer, this application is further described in detail below based on examples and drawings. It is clear that the described examples are merely some but not all of the examples of this application. The following description of at least one illustrative example is merely for explanation and is not construed as any limitation on this application or on the use of this application. All other examples obtained by persons of ordinary skill in the art based on the examples of this application without creative efforts fall within the protection scope of this application.

Examples whose technologies or conditions are not specified are made in accordance with technologies or conditions described in the literature in the field or in accordance with product instructions. The reagents or instruments used are all conventional products commercially available if no manufacturer is indicated.

A preparation method of the secondary battery was as follows.

### (1) Preparation of silicon-carbon composite

Step S101: A biomass porous carbon substrate with a porosity of 50% was placed in a vapor deposition furnace, where the furnace was kept rotating, purged with nitrogen, and preheated to 200 °C.

Step S102: A mixed gas of a silane gas and nitrogen was introduced at a ratio of 1:4, and the furnace pressure was controlled to be 300 pascals (Pa) above standard atmospheric pressure.

Step S103: The temperature was raised to 500 °C, and deposition was performed for 8 h.

Step S104: The silane gas was stopped, the temperature was adjusted to 620 °C, an acetylene gas was introduced at a flow rate of 10%, and deposition was performed for 2 h; and a product discharged from the furnace was screened, to obtain the silicon-carbon composite, where the silicon-carbon composite included a porous carbon substrate and a silicon-based material in pores of the porous carbon substrate.

### (2) Preparation of negative electrode plate

First graphite, a first silicon-carbon composite, a conductive agent acetylene black, a thickener sodium carboxymethyl cellulose, and a binder styrene-butadiene rubber were mixed, and deionized water was added, to obtain a first slurry with a solid content of 49% under vacuum stirring.

Second graphite, a second silicon-carbon composite, a conductive agent acetylene black, a thickener sodium carboxymethyl cellulose, and a binder styrene-butadiene rubber were mixed, and deionized water was added, to obtain a second slurry with a solid content of 49% under vacuum stirring.

① When the negative electrode plate included only the first active layer, the first slurry was applied to a current collector copper foil, dried at 85 °C, and then underwent cold pressing, trimming, slitting, and cutting, and finally dried under vacuum at 120 °C for 12 h to obtain the negative electrode plate.

② When the negative electrode plate included both the first active layer and the second active layer, the first slurry was applied to a current collector copper foil, and dried at 85 °C to form the first active layer on the current collector. Then, the second slurry was applied to the first active layer, dried at 85 °C, and then underwent cold pressing, trimming, slitting, and cutting, and finally dried under vacuum at 120 °C for 12 h to obtain the negative electrode plate.

### (3) Preparation of positive electrode plate

A positive electrode active material NCM, a binder polyvinylidene fluoride, and a conductive agent acetylene black were mixed at a ratio of 97:2:1, then a solvent N-methylpyrrolidone (NMP) was added and stirred to form a positive electrode slurry. The positive electrode slurry was uniformly applied to a positive electrode current collector aluminum foil, and after drying and cold pressing, the positive electrode plate was obtained.

### (4) Preparation of electrolyte

Ethylene carbonate (EC), ethyl methyl carbonate (EMC), and diethyl carbonate (DEC) were mixed uniformly at a volume ratio of 20:20:60 as an organic solvent, then LiPF₆ was dissolved in the organic solvent, and fluoroethylene carbonate (FEC) was added, with a concentration of LiPF₆ in the electrolyte being 1 mole per liter (mol/L) and a mass percentage of FEC being 5wt%.

### (5) Separator: A PP separator was used.

(6) The negative electrode plate, separator, and positive electrode plate were stacked in order and wound to obtain a wound cell. A designed capacity of the cell was 4.5 ampere-hours (Ah). The cell was placed in an outer package of rectangular aluminum shell and dried, and the electrolyte was injected. After processes such as encapsulation, standing, formation, aging, secondary encapsulation, and capacity testing, the secondary battery was obtained.

The compositions of the negative electrode plates in the examples and comparative examples are shown in Table 1.

### Test examples

(1) Test for energy density of battery: At 25 °C, the prepared battery was fully discharged at 1C, then fully charged and fully discharged at a 1C rate, and current actual discharge energy was recorded. At 25 °C, an effective length, width, and thickness of the cell fully charged at 1C were measured, and an effective volume V was calculated. A ratio of the actual discharge energy D of the battery at 1C to the effective volume V of the cell was an actual energy density E of the battery, and E=D/V, where D was measured in watt-hour (Wh), and V was measured in liter (L).
(2) Test for structural stability of electrode plate: The obtained battery was fully charged at 1C, disassembled to obtain the negative electrode plate, folded transversely along a large surface, and rolled once with a 1-kilogram (kg) standard roller along a fold line. The folding and rolling operations were repeated three times, and light transmission or fracture of the electrode plate at the fold was observed. The severity was graded based on four levels: 1. fracture: the electrode plate was broken; 2. severe light transmission: more than 5 light transmission points; 3. slight light transmission: 1 to 5 light transmission points; and 4. no light transmission.
(3) Test for cycling performance of battery: The prepared battery was subjected to 0.5C/1C cycling test at 25 °C, and the number of cycles at capacity decayed to 80% was recorded as corresponding cycling performance of the battery.
(4) Test for charge capability of battery: The cell was fully charged at a 1.2C rate, and then the fully charged cell was disassembled. Lithium precipitation at an anode interface was observed. Four lithium precipitation levels were defined based on area percentages of lithium precipitation: 1. no lithium precipitation; 2. slight lithium precipitation: lithium precipitation area is less than 10%; 3. moderate lithium precipitation: lithium precipitation area accounts for 10% to 30%; and 4. severe lithium precipitation: lithium precipitation area is greater than 30%.

**Table 1**

| | First active layer | | | | | | | Second active layer | | | | | | | Secondary Battery | | | |
|---|---|---|---|---|---|---|---|---|---|---|---|---|---|---|---|---|---|---|
| | First graphite | | | | | Thickness of carbon coating layer | First silicon-carbon composite | Second graphite | | | | | Thickness of carbon coating layer | Second silicon-carbon composite | Energy density | Structural stability of negative electrode plate | Cycling performance of battery | 1.2C charge capability |
| | Flatness | Dᵥ50 | Specific surface area | Mass percentage | Particle composition | | Mass percentage | Flatness | Dᵥ50 | Specific surface area | Mass percentage | Particle composition | | Mass percentage | | | | |
| Example 1 | 2 | 15 | 0.9 | 80% | Primary particles | / | 20% | / | / | / | / | / | / | / | 720 | No light transmission | 1660 | Slight lithium precipitation |
| Example 2 | 4 | 15 | 0.9 | 80% | Primary particles | / | 20% | / | / | / | / | / | / | / | 720 | No light transmission | 1650 | Slight lithium precipitation |
| Example 3 | 8 | 15 | 0.9 | 80% | Primary particles | / | 20% | / | / | / | / | / | / | / | 720 | No light transmission | 1650 | Slight lithium precipitation |
| Example 4 | 2 | 15 | 0.9 | 80% | Primary particles | 20 | 20% | / | / | / | / | / | / | / | 720 | Slight light transmission | 1520 | Slight lithium precipitation |
| Example 5 | 2 | 15 | 0.9 | 80% | Primary 90%+ Secondary 10% | / | 20% | / | / | / | / | / | / | / | 718 | Severe light transmission | 1580 | Slight lithium precipitation |
| Example 6 | 4 | 15 | 0.9 | 80% | Primary particles | / | 20% | 1.5 | 12 | 1 | 80% | Secondary particles | 20 | 20% | 717 | No light transmission | 1560 | No lithium precipitation |
| Example 7 | 4 | 15 | 0.9 | 80% | Primary particles | / | 20% | 1.5 | 12 | 1.6 | 80% | Secondary particles | 20 | 20% | 712 | No light transmission | 1480 | No lithium precipitation |
| Example 8 | 4 | 15 | 0.9 | 80% | Primary particles | / | 20% | 1.5 | 15 | 1 | 80% | Secondary particles | 20 | 20% | 718 | No light transmission | 1490 | Slight lithium precipitation |
| Example 9 | 4 | 15 | 0.9 | 80% | Primary particles | / | 20% | 2 | 15 | 1 | 80% | Primary 50%+ Secondary 50% | 20 | 20% | 721 | No light transmission | 1510 | Slight lithium precipitation |
| Example 10 | 4 | 15 | 0.9 | 80% | Primary particles | / | 20% | 1.5 | 12 | 1 | 80% | Secondary particles | / | 20% | 719 | No light transmission | 1490 | Slight lithium precipitation |
| Comparative example 1 | 1 | 15 | 0.9 | 80% | Primary particles | / | 20% | / | / | / | / | / | / | / | 720 | Severe light transmission | 1440 | Moderate lithium precipitation |
| Comparative example 2 | 2 | 15 | 0.9 | 100% | Primary particles | / | 0% | / | / | / | / | / | / | / | 642 | No light transmission | 2570 | Moderate lithium precipitation |
| Comparative example 3 | 1 | 15 | 0.9 | 100% | Primary particles | / | 0% | / | / | / | / | / | / | / | 645 | No light transmission | 2510 | Slight lithium precipitation |
| Comparative example 4 | / | / | / | 0% | / | / | 100% | / | / | / | / | / | / | / | 813 | Fracture | 520 | Moderate lithium precipitation |

It can be understood that, in Table 1, Dᵥ50 is measured in µm; the specific surface area is measured in m²/g; the thickness of the carbon coating layer is measured in nm; the energy density is measured in Wh/L; the cycling performance of the battery is measured in cycles; in the particle composition of the first graphite, "Primary 90%+Secondary 10%" indicates that the quantity percentage of primary particles in the first graphite is 90%, and the quantity percentage of secondary particles is 10%; and in the particle composition of the second graphite, "Primary 50%+Secondary 50%" indicates that the quantity percentage of primary particles in the first graphite is 50%, and the quantity percentage of secondary particles is 50%.

From Table 1, it can be learned that compared with Comparative example 1, the negative electrode plates in Examples 1 to 3 exhibit better structural stability, indicating that when the first graphite has an appropriate flatness, the structural stability of the negative electrode plates can be improved.

Compared with Example 5, the negative electrode plates in Examples 1 to 3 exhibit better structural stability, indicating that when the proportion of the primary particles in the first graphite is appropriate, the structural stability of the negative electrode plate can be improved.

Compared with Example 2, the battery corresponding to Example 6 exhibits better charge capability, indicating that when second graphite is present, the corresponding battery can achieve better charge performance.

Compared with Comparative examples 2 to 4, the battery corresponding to Example 1 could better balance high energy density, good structural stability of the negative electrode plate, grate cycling performance, and strong charge performance.

The technical features of the embodiments described above can be arbitrarily combined. To keep the description concise, not all possible combinations of the technical features in the embodiments described above are described. However, as long as there is no contradiction in these combinations, the technical features should be considered within the scope of this specification.

The foregoing embodiments only represent several implementations of this application, and descriptions thereof are specific and detailed, but should not be construed as limitations on the scope of this patent. It should be noted that, for persons of ordinary skill in the art, several variations and improvements can be made without departing from the concept of this application, and fall within the protection scope of this application. Therefore, the protection scope of this patent shall be subject to the appended claims.

## Claims

1. A secondary battery, comprising a negative electrode plate, wherein the negative electrode plate comprises a negative electrode current collector and a negative electrode active layer disposed on at least one surface of the negative electrode current collector, the negative electrode active layer comprises a first active layer, the first active layer comprises first graphite and a first silicon-carbon composite, a flatness of the first graphite is greater than or equal to 2, and the first silicon-carbon composite comprises a porous carbon substrate and a silicon-based material in pores of the porous carbon substrate.

2. The secondary battery according to claim 1, wherein the flatness of the first graphite is 2.5 to 20, and optionally, 4 to 16.

3. The secondary battery according to claim 1 or 2, wherein the first graphite comprises primary particles; and
optionally, a quantity percentage of the primary particles in the first graphite is greater than or equal to 90%.

4. The secondary battery according to any one of claims 1 to 3, wherein the first graphite satisfies at least one of the following features:
(1) a volume-based median particle size Dᵥ50 of the first graphite is 12 µm to 18 µm, and optionally, 14 µm to 16 µm; and
(2) a specific surface area of the first graphite is 0.6 m²/g to 1.4 m²/g, and optionally, 0.8 m²/g to 1.2 m²/g.

5. The secondary battery according to any one of claims 1 to 4, wherein the first graphite comprises artificial graphite and/or natural graphite; and
optionally, the first graphite comprises natural graphite, and a mass percentage of the natural graphite in the first graphite is less than or equal to 20%.

6. The secondary battery according to any one of claims 1 to 5, wherein the first silicon-carbon composite satisfies at least one of the following features:
(1) a volume-based median particle size Dᵥ50 of the first silicon-carbon composite is 5 µm to 13 µm, and optionally, 7 µm to 11 µm;
(2) a specific surface area of the first silicon-carbon composite is 1 m²/g to 8 m²/g, and optionally, 1 m²/g to 5 m²/g; and
(3) a mass percentage of the first silicon-carbon composite in the first active layer is 5% to 50%.

7. The secondary battery according to any one of claims 1 to 6, wherein the porous carbon substrate satisfies at least one of the following features:
(1) a mass percentage of the porous carbon substrate in the first silicon-carbon composite is greater than or equal to 40%, and optionally, 40% to 60%; and
(2) a porosity of the porous carbon substrate is 30% to 60%.

8. The secondary battery according to any one of claims 1 to 7, wherein the silicon-based material satisfies at least one of the following features:
(1) a mass percentage of the silicon-based material in the first silicon-carbon composite is less than or equal to 60%, and optionally, 40% to 60%; and
(2) the silicon-based material comprises nano-silicon, and optionally, a grain size of the nano-silicon is less than or equal to 6 nm.

9. The secondary battery according to any one of claims 1 to 8, wherein the negative electrode active layer further comprises a second active layer; the second active layer is disposed on a surface of the first active layer away from the negative electrode current collector; and the second active layer comprises second graphite.

10. The secondary battery according to claim 9, wherein a surface of the second graphite is coated with a carbon coating layer; and
optionally, a thickness of the carbon coating layer is 10 nm to 300 nm, and further optionally, 20 nm to 100 nm.

11. The secondary battery according to claim 9 or 10, wherein the second graphite comprises secondary particles; and
optionally, a quantity percentage of the secondary particles in the second graphite is greater than or equal to 50%, and optionally, 50% to 90%.

12. The secondary battery according to any one of claims 9 to 11, wherein the second graphite satisfies at least one of the following features:
(1) a volume-based median particle size Dᵥ50 of the second graphite is smaller than the volume-based median particle size Dᵥ50 of the first graphite; and
optionally, the volume-based median particle size Dᵥ50 of the second graphite is 9 µm to 15 µm, and further optionally, 11 µm to 13 µm; and
(2) a specific surface area of the second graphite is greater than the specific surface area of the first graphite; and
optionally, the specific surface area of the second graphite is 0.8 m²/g to 1.6 m²/g, and further optionally, 1 m²/g to 1.4 m²/g.

13. The secondary battery according to any one of claims 9 to 12, wherein the second active layer further comprises a second silicon-carbon composite;
optionally, a material of the second silicon-carbon composite comprises a material of the first silicon-carbon composite; and
optionally, a mass percentage of the second silicon-carbon composite in the second active layer is 5% to 50%.

14. An electric apparatus, comprising the secondary battery according to any one of claims 1 to 13.
